# EUROPEAN PATENT SPECIFICATION

(11) **EP 3 463 931 B1**
(45) Date of publication and mention of the grant of the patent: **05.08.2020**
(21) Application number: 17732252.6
(22) Date of filing: 07.06.2017
(51) Int. Cl.: B60B 3/00, B60C 7/10, B60B 5/02, B60C 7/00

(54) **WHEEL**
RAD
ROUE

(30) Priority: 07.06.2016 NL 1041920
(43) Date of publication of application: 10.04.2019
(73) Proprietor: HSV Moulded Foams Group N.V., 6716 AA Ede (NL)
(72) Inventor: VEERMAN, Lambert Bob, 6716 AA Ede (NL); CORNELISSEN, Wilhelmus Michiel Henricus, 6716 AA Ede (NL)
(74) Representative: EDP Patent Attorneys B.V.
(86) International application number: PCT/NL2017/050374
(87) International publication number: WO 2017/213500

(56) References cited:
- WO-A1-2012/091754
- DE-A1- 2 755 111
- DE-U1-202011 004 955
- Anonymous: "Partikelschaum-Verbundspritzgießen (PVSG) | Kunststoffe.de", , 16 September 2013 (2013-09-16), XP055338724, Retrieved from the Internet: URL:https://www.kunststoffe.de/produkte/ue bersicht/beitrag/partikelschaum-verbundspr itzgiessen-pvsg-leichter-und-steifer-65778 8.html [retrieved on 2017-01-25]
- Tpe | Polymertypen-Resinex: "TPE - Thermoplastische Elastomere", , 26 January 2017 (2017-01-26), XP055339361, http://www.resinex.de/polymertypen/tpe.htm l Retrieved from the Internet: URL:http://www.resinex.de/polymertypen/tpe .html [retrieved on 2017-01-26]

## Description

### FIELD OF THE INVENTION

The present invention relates to objects consisting of a plurality of members comprising different types of plastic, wherein at least one of the members comprises expanded thermoplastic polyurethane (E-TPU). An example of such an object relates to a wheel. The invention also relates to a method of producing the objects of the plurality of plastics using plastic processing techniques, including injection molding. The method comprises the use of, for example, 2K or 3K molds.

### BACKGROUND OF THE INVENTION

Wheels for means of transport comprising solid tires are known in the art. In the online journal "Kunstoffe.de" e.g. a development regarding a wheel for a model air plane was reported at 16 September 2013. For that wheel, a plastic rim is injected in a first injection molding process against a solid tire of expanded polystyrene body. In a next step after changing the pre-molded part in the tool, the tire is overmolded with a thermoplastic elastomer.

DE2755111 e.g. describes a non-blowout tire for invalid carriages, childrens' scooters, cycles, etc. that has a resilient solid core of foamed polymer, preferably polyurethane; the tread is on a special elastic cover of tough rubber or polymer e.g. nonporous polyurethane, which is 2-5 mm. thick and is bonded to the core.

DE 20 2011 004 955 U1 describes a wheel assembly comprising a hard plastic rim on which a rubber band is mounted together with a hard foam inlay touching it in the tread region; the cavity between the side-walls of the band, the inlay and the rim is then filled with a soft foam.

### SUMMARY OF THE INVENTION

Although generally wheels with pneumatic tires are preferred, in particular for the use for means of transport for persons, in this category there are still several means of transport, which are usually provided with wheels comprising solid tires. Prams, in this context relating to a carriage comprising at least two wheels and usually three or four wheels for the transport of babies and young children, are an example of such means of transport, often comprising wheels with solid tires. Also walker-rollators often have solid tires. Also certain types of wheelchairs often comprise (swivel) wheels with solid tires. Rolling of prior art wheels with solid tires, including, for example, tires of ethylene vinyl acetate foam, below also referred to as "EVA", covered by thermoplastic polyurethane, hereinafter also referred to as "TPU", runs less smoothly than the rolling of a wheel with a pneumatic tire.

Another combination of materials used for the manufacture of wheels known from the literature comprises expanded polypropylene ("EPP"), being the material of the tire, wherein the tire is at least partially coated with a thermoplastic elastomer and wherein a polypropylene ("PP") is used for rim material. Known prior art solutions for wheels comprising solid tires may especially be less convenient for the user of the means of transport comprising the wheel. Yet, wheels comprising pneumatic tires may become flat and/or may loosen from the rim.

Hence, it is an aspect of the invention to provide an object, especially a wheel, which preferably further at least partly obviate(s) one or more of the above-described drawbacks. It is further an aspect of the invention to provide a method for producing such object. It is also an aspect of the invention to provide a means of transport, for e.g. a person, comprising such wheel. The present invention may have as object to overcome or ameliorate at least one of the disadvantages of the prior art, or to provide a useful alternative.

Therefore, in a first aspect, the invention provides an object comprising at least three (distinguishable) members, wherein the object comprises a first member, especially made of an expandable thermoplastic plastic, more especially made of expanded thermoplastic polyurethane, to which respectively the second and third member, each especially comprising an injection-moldable thermoplastic plastic, are mechanically, physically or chemically linked (especially) by means of injection molding.

Hence, the invention provides an essentially injection molded object comprising at least three (distinguishable) members, wherein the object comprises a first member, especially made of an expandable thermoplastic plastic, more especially made of expanded thermoplastic polyurethane, to which respectively the second and third member, each comprising a(n) (injection-moldable) thermoplastic plastic, are mechanically, physically or chemically linked (associated). Especially, the invention provides an essentially injection molded object comprising at least three (distinguishable) members, wherein the object comprises a first member, especially made of an expandable thermoplastic plastic, more especially made of expanded thermoplastic polyurethane, a second member and a third member, each comprising a(n) (injection-moldable) thermoplastic plastic, wherein the members are (functionally) associated to each other.

Hence, the second member is associated to the first member and the third member is (functionally) associated to the first member. Such (functional) association may comprise a mechanical, a physical or a chemical (type of) association. The association may also comprise any combination of (two or more of) a mechanical, physical, and chemical association. Especially, a type of association between the first member and the second member and between the first member and the third member may be independently selected from each other. In an embodiment said associations between the respective members comprise the same type of association. In an embodiment the association between the first member and the third member comprises a chemical association. In a further embodiment, the association between the first member and the second member comprises (a combination of) a mechanical association and especially a physical association. Like-wise the injection-moldable thermoplastic plastic of the second member and of the third member may independently of each other be selected. The object comprises at least three (distinguishable) members, wherein the object comprises a first member comprising an expanded thermoplastic plastic, especially expanded thermoplastic polyurethane, a second member comprising an injection-moldable thermoplastic plastic, and a third member comprising an injection-moldable thermoplastic plastic, wherein the second member is mechanically, physically or chemically linked to the first member by means of injection molding and wherein the third member is mechanically, physically or chemically linked to the first member by means of injection molding.

Herein the term "distinguishable" especially relates to not being the same, i.e. being different, e.g. in appearance, color, shape, etc..

The phrase "are mechanically, physically or chemically linked" may especially indicate that each one of the members is associated by a mechanical, physical or chemical link to one or both of the others. The object comprises a wheel, the first member comprises a (solid) tire, the second member may comprise a rim and the third member comprises a tread.

Such wheel, especially such tire, may be very flexible (resilient) and may be form-retaining. Because of the expanded material, such wheel may be light, especially compared to other solid wheels. Such wheel has a high damping coefficient and may equilibrate unwanted irregularities in the surface of the road. Especially, the tire may elastically absorb forces occurring during contact between the wheel and the surface. Further, because of the association between the rim and the tire and between the tire and the tread, especially comprising a mechanical bond and/or a chemical bond and/or a physical bond (see also below), the entire wheel may be form-retaining. Especially, the tire may not come loose from the rim. The tire may also get a puncture or not become flat.

It is noted that herein the term "wheel" relates to a wheel with a tire (including a tread). Especially, a wheel without the tire is referred to herein as "rim". The term "rim" especially relates to a wheel rim, especially a wheel rim including a hub and optionally spokes. Yet, the rim may also comprise a full disc (also known as a "disk wheel"). Hence, the term "rim" especially does not only refer to an edge for holding the tire. Hence, in embodiments, the rim comprises a spoke. The rim especially comprises a hub, especially for mounting the rim (the wheel) on an axle. The term "a spoke" may also relate to more than one (different) spoke.

The term "tread" especially relates to a layer on the tire configured for contacting a surface, especially a ground when normally using the wheel (during rolling over the ground). The tread may be flat or smooth (comparable to a slick tire). The tread may also comprise a (tread) pattern, especially comprising grooves or lines. The tread may comprise a texture.

The first member, especially the tire, comprises an expanded thermoplastic plastic. Especially, the first member, especially the tire, is made of an expanded thermoplastic plastic. Expanded thermoplastic materials are known and may e.g. comprise expanded polyethylene ("EPE"), expanded polystyrene ("EPS"), expanded polypropylene ("EPP"), and expanded thermoplastic polyurethane ("E-TPU"). The expanded thermoplastic plastic may be selected based on their properties. Expanded PE, EPP, EPS may advantageously absorb shocks and vibrations. Further EPS, may especially comprise a very low density. EPE and E-TPU, especially E-TPU may comprise a high level of energy absorption even in the case of repeated load. Some (further) relevant properties are given in the table below.

**Table 1: Relevant parameters of some expanded thermoplastic materials showing the suitability of use with respect to the given characteristic, from --- to +++ (not suitable to very suitable);**

| | Process ability into tire | Compatibility with other injection-moldable plastics* | Price | Shock absorpt ion | Chemical resistance | Resilience | Rebound | Density |
|---|---|---|---|---|---|---|---|---|
| EPP | + | +/- | ++ | ++ | +/- | +/- | ++ | + |
| EPS | ++ | +/- | +++ | +++ | -- | - | +/- | ++ |
| EPE | + | +/- | ++ | ++ | +/- | +/- | - | + |
| E-TPU | +/- | - | - | + | ++ | ++ | +++ | +/- |

| | | | | | | | | |
|---|---|---|---|---|---|---|---|---|
| * because of the chemical resemblance, compatibility between PP and EPP, PS and EPS, PE and EPE , TPU and E-TPU is very good. | | | | | | | | |

It was found that the production of the first element from EPP, EPS, or EPE beads (also known as "(mini) pellets", "granules" "granulate") may be more advantageous then the production from E-TPU beads. Especially EPP, EPS beads may be spherical providing good flowing characteristics (towards and in a mold for forming the first element). In contrast to that, E-TPU beads may be egg-shaped and may comprise abrasive characteristics hindering a flow of the particles towards the mold and inside the mold. Also, dimensioning of a product made of E-TPU appeared to be much harder to control than of comparable products made of EPS and EPP. The product made from E-TPU may especially show some (less controllable) shrinkage. Yet, E-TPU may show very good characteristics of the final product, of the object, especially of the wheel. E-TPU may be deformed over a long period and still retain shape. E-TPU, especially comprises good recovery behavior and continuous load. Further, E-TPU has excellent damping or cushioning properties which may remain unchanged also at lower or higher temperatures.

Hence, in embodiments, the first member, especially the tire, comprises expanded TPU (E-TPU). In further embodiments, the first member, especially the tire, is made of expanded TPU (E-TPU). The injection-moldable thermoplastic plastic for the tire may comprise E-TPU.

A (solid) tire has a circular shape and has an outer circumference, an inner circumference and an opening. A tire further comprises a side wall of the tire arranged between the inner circumference and the outer circumference of the tire. The rim is bound (linked) to the inner circumference of the tire. The rim is configured in the opening. The tread is bound (linked) to the outer circumference of the tire.

In embodiments, the rim is provided by injection molding (only) in the circular opening of the tire. Especially, the rim comprises an outer circumference (edge), and the outer circumference of the rim adjoins the inner circumference of the tire. Hence, in embodiments, the rim is connected to an inner circumference of the tire and the tread is connected to an outer circumference of the tire, wherein an outer circumference of the rim adjoins the inner circumference of the tire. In further embodiments the tread is provided by injection molding at the outer circumference of the tire. In embodiments, the tread is arranged at the outer circumference of the tire.

In embodiments, the tire comprises a recess (in a surface of the tire) along the outer circumference of the tire. Said recess along the outer circumference of the tire may especially be filled by the tread provided by injection molding. Hence, especially the recess along the outer circumference of the tire ("recess") may comprise the (substantially complete) tread. Yet, in further embodiments, the recess comprises only a part of the tread. Yet in other embodiments, the tire does not comprise a recess (especially wherein the tread is provided at said surface of the tire). Especially, the tire comprises a recess along the outer circumference of the tire, wherein the recess comprises at least part of the tread.

The wheel may have a wear resistant tread, especially wherein the resilient properties of the tire may be retained.

The rim and the tread may comprise the same injection-moldable thermoplastic plastic. The rim and the tread my also comprise different injection-moldable thermoplastic plastics. Also the rim and/or the tread may comprise more than one different injection-moldable thermoplastic plastic. Injection-moldable thermoplastic plastics ("thermoplastic plastic" and also known as "thermoplastic materials" or "thermoplastic polymer") are known in the art and may comprise e.g. acrylonitrile-butadiene-styrene ("ABS"), nylon/polyamide ("PA"), polycarbonate ("PC"), polypropylene ("PP"), polystyrene ("PS"), polyether ether ketone ("PEEK"), (thermoplastic) polyurethane (TPU) and high density polyethylene (HDPE). In an embodiment, the (injection-moldable) thermoplastic plastic comprises acrylonitrile-butadiene-styrene ABS. In a further embodiment the (injection-moldable) thermoplastic plastic comprises polyamide (PA). Yet, in a further embodiment the (injection-moldable) thermoplastic plastic comprises polycarbonate (PC). Yet, in a further embodiment the (injection-moldable) thermoplastic plastic comprises polyether ether ketone (PEEK). The (injection-moldable) thermoplastic plastic may further (also) comprise polypropylene (PP). In a further embodiment, the (injection-moldable) thermoplastic plastic comprises polystyrene (PS). Yet, in a further embodiment the (injection-moldable) thermoplastic plastic comprises (thermoplastic) polyurethane (TPU). The (injection-moldable) thermoplastic plastic may (also) comprise high density polyethylene (HDPE). The (injection-moldable) thermoplastic plastic is especially tough, especially at room temperature, even more especially at temperatures between -20 °C and 30 °C.

Hence, in an embodiment (i) the rim (30) comprises an injection-moldable thermoplastic plastic selected from the group consisting of acrylonitrile-butadiene-styrene (ABS), nylon/polyamide (PA), polycarbonate (PC), polypropylene (PP), polystyrene (PS), polyether ether ketone (PEEK), thermoplastic polyurethane (TPU), and high density polyethylene (HDPE), and (ii) the tread (40) comprises an injection-moldable thermoplastic plastics selected from the group consisting of acrylonitrile-butadiene-styrene (ABS), nylon/polyamide (PA), polycarbonate (PC), polypropylene (PP), polystyrene (PS), polyether ether ketone (PEEK), thermoplastic polyurethane (TPU), and high density polyethylene (HDPE).

The term "an injection-moldable thermoplastic plastic" and the like, may also relate to more than one (different) injection-moldable thermoplastic plastic. Hence, in an embodiment a first (injection-moldable) thermoplastic plastic comprises TPU and a second (injection-moldable) thermoplastic plastic comprises ABS.

In an embodiment the rim comprises ABS. The injection-moldable thermoplastic plastic for the rim may comprise ABS. In a further embodiment the tread comprises TPU. In embodiments, the rim and the tire may be associated by a mechanical and physical bond, especially between two different thermoplastic materials of the tire and the rim respectively. In further embodiments, the tread and the tire may be associated by a chemical bond, especially between an expanded type of a thermoplastic plastic and a non-expanded type of said thermoplastic plastic, for the tire and the tread respectively. In an embodiment the tread and the tire are linked by a chemical bond between E-TPU and TPU of the tire and the tread respectively.

Herein, the terms "associated", "linked" and "bound" are especially used interchangeably, especially relating to a mechanical, physical, and/or chemical connection (bond) between elements.

Unlike processes in which foamed polymer products are provided with a thin coating that primarily provides a moisture-tight or gas-tight coating around the foamed plastic or to provide the formed plastic with a finer appearance, the objective of the tread provided at the tire is especially to increase the wear resistance of the tire. The tread may comprise a thickness selected in the range from 1 mm-10 mm, especially 1 mm-6 mm, even more especially 2 mm-5 mm. In further embodiments, the tread may comprise a thickness to be equal to or less than 50 mm, especially equal to or less than 40 mm, such as equal to or less than 25 mm. In embodiments, the tread comprises a thickness of at least one millimeter and at most six millimeters, especially of at least two millimeters and at most five millimeters. The tread may cover at least part of the tire, especially a part of a surface of the tire not associated with the rim. The tread may (also) substantially cover the entire tire, especially, the part of the surface of the tire not associated with the rim (see also below). The tread may further comprise (a pattern of) openings (through holes), especially wherein a part of the surface is visible through the holes. The tread may comprise a smooth surface.

As described above, the term tread especially relates to a layer (that may comprise a tread pattern). The term "thickness of the tread" and the like especially relate to a thickness or height of said layer. The term especially may not (solely) relate to a height of the grooves or the pattern (of the tread). The tread may also comprise a pattern, especially provided by grooves in the tread. Especially a depth of a groove is smaller than a thickness of the tread.

The term "thickness", further, especially relates to a height of the tread at a location configured to contact the ground when using the wheel. It is noted that a height of the tread may (also) relate to more than one height. For instance a part of the tread that normally would not contact the ground may especially comprise a height that is smaller than the thickness of the tire. Further, the term "a thickness" may also relate to more than one thickness.

The flexibility or resilience of the tire may further be taken advantage of by having the tread being bound (only) to (or arranged at) the outer circumference of the tire and especially by having the rim (only) being bound to (or arranged at) the inner circumference of the tire. Hence, especially, the second member (the rim) and the third member (the tread) are configured at a mutual distance, especially wherein the first member is arranged (at least partly) between the other members. In embodiments, an outer surface of the object comprises (an outer surface of each of) the at least three different members. Especially, the outer surface of the tire is in contact with the surroundings. Especially such embodiment may also absorb any shear forces resulting from irregularities, such as small stone, holes, and cracks at or in the road, which e.g. otherwise (especially having a rigid contact between the tread and the rim) might be transmitted to the means of transport and/or the person being transported.

In further embodiments, the second member and the third member may contact each other. Especially, the tread may contact the rim. The outer surface, especially the side wall(s) may (also) comprise at least part of the tread. Said part of the tread may herein also be referred to as "coating". In embodiment, a coating may not be comprised by the tread. Hence the coating may either be or not be part of the tread. Especially, the coating extends from the tread. Especially, (the remainder of) the tread may during normal use of the tire contact a ground, especially roll over the ground. Especially, the coating may during normal use of the tire, not contact the ground/surface. In embodiments, the outer surface, especially the side wall, of the tire may (also) comprise a coating comprising an (injection-moldable) thermoplastic plastic. In embodiments, the coating and the tread comprise the same injection-moldable thermoplastic plastic. In embodiments, the outer surface (the side wall) of the tire may (also) comprise the tread. A thickness of the tread, especially of the coating, provided at the side wall of the tire may be selected based on the characteristics of the tire, especially based on a (overall) density of the tire. Based on said thickness of the tread, especially of the coating, and a (overall) density of the tire, e.g. a rolling resistance and especially a resilience of the wheel may be controlled. A thickness of the coating may relate to the thickness of the tread. Especially, a thickness of the tread may relate to more than one thickness of the tread. The density of the tire may be controlled by a pressure of the method for producing the tire.

A resilience of the wheel may be the result of a resilience of the tire. The resilience of the wheel may further be a result of the coating, especially a configuration of the coating, such as a thickness of the coating, or a presence of (a pattern of) one or more openings in the coating. A degree of comfort for a user of (a means of transport comprising) the wheel may be provided by selecting the resilience of the wheel. Especially the resilience of the wheel may be selected as a function of at least one characteristic of the wheel selected from the group consisting of a density of the tire, a thickness of the tread, and a configuration of the coating (such as a thickness of the coating, an opening in the coating, a change in the thickness of the coating, etc.). The resilience of the wheel is especially tunable.

Hence, in an embodiment, the side wall of the tire comprises a coating comprising an injection-moldable thermoplastic plastic, especially provided by means of injection molding, wherein the tread and the coating comprise the same injection-moldable thermoplastic plastic, wherein the coating is mechanically, physically and/or chemically associated with the tire, the rim and the tread. The coating is especially associated with at least a part of the rim.

In a further embodiment, a side wall of the tire comprises a coating comprising a(n) (injection-moldable) thermoplastic plastic, especially provided by means of injection molding, wherein the tread and the coating comprise (substantially) the same (injection-moldable) thermoplastic plastic, wherein the coating is (at least partly) mechanically, physically and/or chemically associated with the tire, the rim and the tread.

In a further aspect, the invention provides a means of transport (for a person), comprising an object, especially a wheel, described herein, wherein the means of transport comprises in embodiments a device selected from the group consisting of a pram, a stroller, a walker-rollator, and a wheelchair. The means of transport may comprise more than one (different) wheel according to the invention. Especially, the means of transport comprises two or more wheels, such as three wheels or four wheels according to the invention. The means of transport may also comprise one or more wheels according to the invention and one or more other wheels (such as comprising pneumatic tires, or solid tires known in the art).

Such means of transport may be more convenient for the user of the means of transport that means of transport comprising (only) prior art wheels.

In yet a further aspect, the invention provides a method for producing an object, especially a wheel, described herein, wherein the method comprises the following steps: (a) producing a tire of an expanded thermoplastic plastic, especially expanded thermoplastic polyurethane, wherein the tire comprises (an outer circumference, an inner circumference, an opening, and) a recess along the outer circumference; (b) introducing the tire produced of the expanded thermoplastic plastic, especially of expanded thermoplastic polyurethane, into a mold, especially a 2K or 3K mold; (c) after introducing the tire in the mold, especially in the 2K or 3K mold, respectively injection molding a rim (substantially) within the inner circumference of the tire and injection molding a tread (substantially) (in the recess) along the outer circumference of the tire.

Especially, injection molding a rim comprises injecting an injection-moldable thermoplastic plastic in a first cavity in the 2K or 3K mold, especially to provide the rim (see below). Especially, injection molding a tread comprises injecting an injection-moldable thermoplastic plastic in a second cavity in the 2K or 3K mold, especially to provide the tread.

Essentially, injection molding comprises a 2K mold or a 3K mold. A 2K mold (or "die") relates to two components (2K) injection molding (or two-shot injection molding), wherein two different polymers (or two different colors of the same polymer) are processed, especially simultaneously, into a product by means of one injection molding process and/or one injection molding apparatus.

A 2K mold offers the possibility to inject in one mold for examples combinations of hard and soft plastic materials and /or two plastics having different colors at the same time. In addition to the ability to achieve distinctive functional and aesthetic features in a single process step, the use of a 2K mold also offers cost advantages, as multiple injection molding and / or assembly steps can be reduced to one injection molding process. This technology enables several functions to be integrated into an injection molded product.

Likewise, a 3K mold relates to a three components (3K) injection molding process, wherein especially three components (different polymers, and/or polymers with different colors) may be injected simultaneously in the same mold to provide the product.

Especially, the rim is provided in the inner circumference, and especially the tread is provided along the outer circumference, especially in the recess. Hence, the rim may not contact the tread. The tire of E-TPU when introduced in the mold may (partly) function as a wall of the mold and especially may provide (together with the mold) the first cavity and the second cavity that may be filled (injected) with injection-moldable material(s). The first cavity may be configured for shaping the rim, and the second cavity may be configured for shaping the tread (during injection molding of the rim and the tread). In an embodiment the tire together with the mold (especially a combination of the tire and the mold) provide (at least) two cavities, wherein a shape of a first cavity corresponds to a shape of the rim and a shape of a second cavity corresponds to a shape of the tread.

In further embodiments, a (small) clearance may be provided between the tire and the mold, and especially during injecting in the first cavity and/or in the second cavity a part of the injection-moldable material may fill the clearance, especially providing a coating connecting the rim and the tread. Hence, in an embodiment, a clearance is provided between the tire and the mold, wherein during injection molding the tread a coating is provided connecting the tread to the rim. Hence, the tread may extend over the wheel, especially providing the coating. The coating may bridge at least partly the tire between the rim and (the remainder of) the tread. The coating may comprise openings. The coating may further comprise a (gradual) change in the thickness of the coating, especially in a direction from the outer circumference of the tire towards the rim.

Such clearance may e.g. be the result of a shrinkage of the tire (see above). A width of the clearance may further be controlled by process conditions of the injection molding process, such as a pressure of the process and/or a temperature of the process. In embodiments, the method further comprises determining a product characteristic of the tire, especially a dimension, before introducing the tire into the mold. In further embodiments, the method further comprises selecting a pressure for the injection molding of the rim and/or of the tread and especially injecting one or more of the injection-moldable thermoplastic plastics at the selected pressure(s). A pressure is especially selected based on a product characteristic of the tire. In yet a further embodiment, the temperature of the mold is selected, especially based on product characteristic of the tire. Said selection of process conditions, especially based on a product characteristic of the tire and/or a product characteristic of the wheel especially relate to "control measures" (of the method).

Further, the product characteristics of the tire, such as a density of the tire and/or a resilience of the tire, may be controlled in the production process of the tire. The tire is especially produced in a mold from pellets that may be expanded by steam. The tire may be shaped from expanded thermoplastic polyurethane. By controlling a pressure in the mold and/or a steam pressure, and/or a temperature and/or a process time during shaping of the tire the density of the tire may for instance be configured. The product characteristics of the tire may further be controlled by selecting the (type of) pellet(s) (to be expanded).

The invention describes amongst others 2K molding. However, this does not exclude the use of nK molding, wherein n is larger than 2, such as 3K molding, etc. In further embodiments n equals 1.

The term "a product characteristic of the tire" may also relate to more than one different product characteristic (of the tire).

The object of the invention, especially the wheel may especially be produced by embodiments of the methods of the invention (see below). Hence (aspects of) embodiments of the method may relate to (aspects of the) embodiments of the method(s) described herein, and vice versa.

The object, especially the wheel may (also) be produced using a mold (especially two molds) with one cavity. In embodiments, the tire produced of expanded thermoplastic polyurethane may be introduced into such mold comprising a cavity. Successively, the rim may be injection molded substantially within the inner circumference of the tire. After removing the tire having the rim associated with the tire from the mold, the tire (having the rim associated with the tire) may be introduced in a second mold, comprising a cavity and the tread may be injection molded substantially in the recess along the outer circumference of the tire to provide the wheel. It will be understood that in other embodiments, in a first mold the tread may be injection molded along the outer circumference, to provide a tire comprising the tread. After introducing the tire comprising the tread in a further mold, the rim may be injection molded to associate the rim with the tire and especially to provide the wheel of the invention. Hence, the method may also comprise the use of a mold, especially at least two molds, comprising one cavity.

Although the method of the present invention for producing objects is applicable for a virtually inexhaustible range of objects, as an example the following description will refer to producing a wheel according to the method.

It is, inter alia, an objective of the present invention to provide wheels with solid tires which have better rolling characteristics than prior art wheels with solid tires. The present invention also comprises a method for producing such wheels.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an exploded view of the members of an embodiment of a wheel produced according to the method of the invention;
Fig. 2 schematically depicts an exploded front view of a wheel composed of members shown in Fig. 1.

The drawings are not necessarily to scale.

### DETAILED DESCRIPTION OF THE EMBODIMENTS

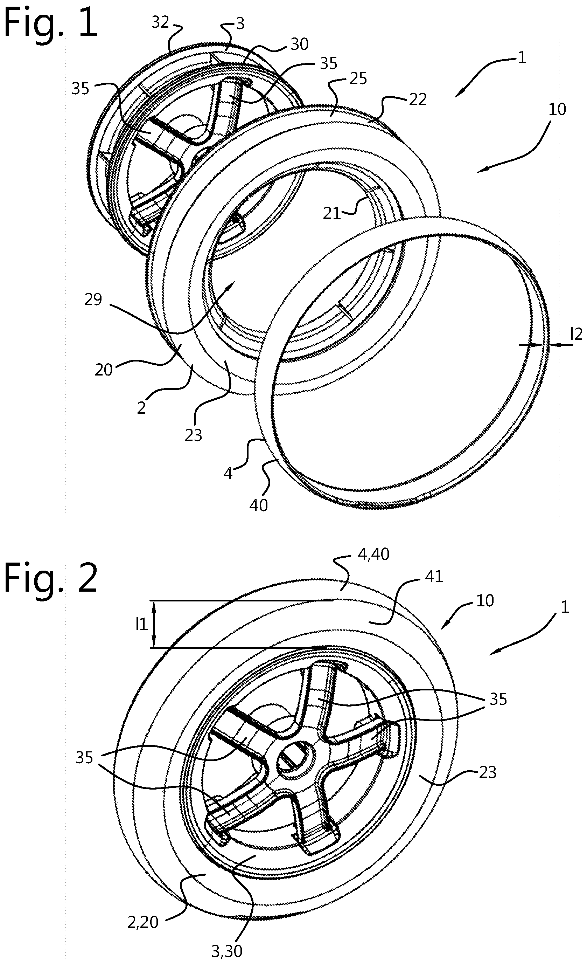

Fig. 1 schematically depicts an exploded view of the members of an embodiment of a wheel to be produced by means of the method according to the invention. In this embodiment, the members comprise a tire 20, a rim 30 and a tread 40.

The embodiment of the method according to the invention for the production of this wheel 10 comprises the following process steps:
A. Shaping of the tire 20 from expanded thermoplastic polyurethane, herein also referred to as E-TPU, in a mold. Pre-expanded E-TPU beads are used as a starting material. These are introduced into a cavity with a shape and dimensions of the tire 20, after which low pressure steam is injected into and between the E-TPU beads introduced into the mold. Because of this, the beads further expand and adhere to each other. Next, the mold is cooled by forced cooling, for example by circulating water through the mold. The finished tire 20 can then be unloaded from the mold. In an embodiment of the method, a machine developed for processing expanded polypropylene (EPP) is used for processing the E-TPU beads into the tire 20.
   As shown in Fig. 1, this tire 20 comprises a recess 25 at the location where the tread 40 may normally be.
B. Inserting the tire 20 produced from E-TPU in a 2K ("2 components") mold (it is noted that in a further embodiment a tire 20 is inserted in 3K mold. Yet in another embodiment the tire 20 is inserted in a single cavity mold for the rim and successively in a further single cavity mold for the tread (or vice versa) (see above)).
   After inserting the E-TPU tire 20 in the 2K mold, the rim 30 and the tread 40 are injected, especially simultaneously, against the tire 20. In an embodiment, the rim 30 is produced from acrylonitrile butadiene styrene, also known as ABS, and the tread 40 is produced from polyurethane, also known as TPU. This way, a mechanical and physical association (bond) between the E-TPU and ABS and a chemical association (bond) between the E-TPU and the TPU is provided. The objective of the TPU tread 40 provided in the recess 25 in the tire 20 is especially to increase the wear resistance of the tire 20. In this case, it is not just a moisture or gas-tight coating or a coating to provide a finer appearance. In some embodiments of a wheel 10 produced with the method of the present invention, the tread 40 comprises a thickness (12) of about 2 to 5 millimeters. However, the invention provides therefore that the tread can comprise any desired or useful thickness (12).

The method according to the present invention is the first method for producing wheels with solids tire using a 2K mold, wherein E-TPU is applied as material for the tire 20. Producing a wheel 10 with a tire 20 of foamed plastic using a 2K mold is not new in itself. However, none of the producers of such prior art wheels have shown the inventiveness to apply E-TPU as material for the tire. The method of the present invention comprises measures for maintaining the shape stability of the member manufactured in the 2K mold from E-TPU during subsequent injection molding of the remaining members. Below, these measures will also be referred to as control measures.

In an embodiment of the method according to the invention, E-TPU in the form of beads is applied for the production of the tire 20. Such beads are for instance marketed by the chemical company BASF under the trade name Infinergy®. Said material is characterized, among other things, by a very high resilience. In resilience elasticity measurements according to the ISO 8307 'ball rebound test', this material achieves a rebound of over 55%. This is significantly higher than the rebound achieved with other expanded foams, such as EPP with a rebound of 30%, EVA with a rebound of 37% and EPE (expanded polyethylene) with a rebound of 50%. Also other types of E-TPU beads may be applied, e.g. provided by another (chemical) company. Using other types of E-TPU beads may provide a comparable tire.

Fig. 2 shows an exploded front view of a wheel 10 produced with the method according to the present invention, comprising a tire 20, a rim 30 provided by injection molding in the circular opening 29 of the tire 20, wherein the rim 30 along its outer circumference 32 adjoins the inner circumference 21 of the tire 20. Additionally, Fig. 2 shows that the recess 25 along the outer circumference 22 of the tire 20 and visible in Fig. 1 is filled by tread 40 being injected in the recess 25, especially in the 2K mold. In Fig. 2 the rim 30 and the tread 40 are configured at a mutual distance 11 In embodiments a coating 41 may be present between the tread 40 and the rim 30.

It is noted that the coating 41 is not shown in the figures; only the reference number is depicted to indicate the location of a possible coating. Such coating 41 may be part of the tread 40, especially the part of the tread 40 that under normal use of the wheel 10 will not contact the ground. The coating 41 may be provided by injection molding the tread 40. The coating may extend from the tread 40 towards the rim 30 and may bridge at least part of the tire 20, especially a side wall 23 of the tire 20, between the rim 30 and the tread 40. Such coating 41 also comprises a(n) (injection-moldable) thermoplastic plastic, especially provided by means of injection molding. And especially, the tread 40 and the coating 41 comprise the same (injection-moldable) thermoplastic plastic. The coating 41 is (at least partly) mechanically, physically and/or chemically associated with the tire 20 and the tread 40. The coating 41 extends from the tread 40 in a direction towards the rim 30. The coating 41 may in embodiments be part of the tread 40. The coating 41 may (also) contact the rim 30. Therefore, the coating may also be (at least partly) mechanically, physically and/or chemically associated with the rim 30.

The embodiment of the wheel 10, especially of the rim 30, depicted in Fig. 1 and Fig. 2 comprises spokes 35. The rim 30 does not require comprising a spoke 35. In further embodiments (not shown), the rim 30 may comprise a full disc or at least a partly full disc (and a hub, especially for mounting the rim 30 (the wheel 10) on an axle).

An example embodiment of the wheel 10 produced according to the present method, wherein the tire 20 comprises E-TPU, characterized itself by rolling characteristics approaching those of a wheel provided with a pneumatic tire having similar dimensions and bearing. At least one wheel 10 may e.g. be comprised in a means of transport described herein, especially wherein the means of transport comprises a device selected from the group consisting of a pram, a stroller, a walker-rollator, and a wheelchair.

In addition to embodiments of the method of the invention described above comprising the use of a 2K mold, the method according to the invention is also applicable for other products comprising one or more members produced from E-TPU, wherein the E-TPU members are inserted in a 3K ("3 components") mold to inject (injection mold) three different colors or types of plastics to or over the E-TPU members. Yet, further embodiments, may comprise a 4K mold or a 5K mold (in stead of a 2K mold or a 3K mold).

In embodiments, the method comprises the application of a mold selected from the group consisting of a 3K mold, a 4K mold, and a 5K mold, wherein for or in addition to the injection molding of the rim 30 and of the tread 40, more than two types of plastic or more than two colors of plastic are applied in the injection molding. Hence, the method according to the invention is also applicable for other products comprising one or more members produced from E-TPU, wherein the E-TPU members are inserted in an nK mold to inject (injection mold) n different colors or types of plastics to or over the E-TPU members.

The term plurality especially refers to two or more.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to an advantage.

## Claims

1. An object (1) comprising at least three distinguishable members, wherein the object comprises a first member (2) made of expanded thermoplastic polyurethane (E-TPU) to which respectively the second (3) and third (4) member, each comprising an injection moldable thermoplastic plastic, are mechanically, physically or chemically linked by means of injection molding, wherein the object (1) comprises a wheel (10), wherein the first member (2) comprises a tire (20) made of expanded thermoplastic polyurethane (E-TPU) and the remaining two members (3, 4), respectively, comprise a rim (30) and a tread (40), wherein the rim (30) is connected to an inner circumference (21) of the tire (20) and the tread (40) is connected to an outer circumference (22) of the tire (20), wherein an outer circumference (32) of the rim (30) adjoins the inner circumference (21) of the tire (20).

2. The object (1) according to claim 1, wherein the tire (20) comprises a recess (25) along the outer circumference (22) of the tire (20), wherein the recess (25) comprises at least part of the tread (40).

3. The object (1) according to any of the preceding claims 1-2, wherein the rim (30) and the tread (40) are configured at a mutual distance (11).

4. The object (1) according to any of the preceding claims 1-3, wherein a side wall (23) of the tire (20) comprises a coating (41) comprising an injection-moldable thermoplastic plastic, wherein the tread (40) and the coating (41) comprise the same injection-moldable thermoplastic plastic, and wherein the coating (41) is mechanically, physically and/or chemically associated with the tire (20), the rim (30) and the tread (40).

5. The object (1) according to any of the preceding claims 1-4, wherein the rim (30) comprises an injection-moldable thermoplastic plastic selected from the group consisting of acrylonitrile-butadiene-styrene (ABS), nylon/polyamide (PA), polycarbonate (PC), polypropylene (PP), polystyrene (PS), polyether ether ketone (PEEK), thermoplastic polyurethane (TPU), and high density polyethylene (HDPE), and wherein the tread (40) comprises an injection-moldable thermoplastic plastics selected from the group consisting of acrylonitrile-butadiene-styrene (ABS), nylon/polyamide (PA), polycarbonate (PC), polypropylene (PP), polystyrene (PS), polyether ether ketone (PEEK), thermoplastic polyurethane (TPU), and high density polyethylene (HDPE).

6. The object (1) according to any of the preceding claims 1-5, wherein the rim (30) comprises acrylonitrile-butadiene styrene (ABS).

7. The object (1) according to any of the preceding claims 1-6, wherein the tread (40) comprises thermoplastic polyurethane (TPU).

8. The object (1) according to any of the preceding claims 1-7, wherein the tread (40) comprises a thickness (12) of at least one millimeter and at most six millimeters.

9. The object (1) according to any of the preceding claims 1-8, wherein the tread (40) comprises a thickness (12) of at least two millimeters and at most five millimeters.

10. The object (1) according to any of the preceding claims 1-9, wherein a resilience of the wheel (10) may be selected as a function of at least one characteristic of the wheel (10) selected from the group consisting of a density of the tire (20), a thickness (12) of the tread (40), and a configuration of the coating (41).

11. A means of transport, comprising an object (1) according to any of the preceding claims, wherein the means of transport comprises a device selected from the group consisting of a pram, a stroller, a walker-rollator, and a wheelchair.

12. A method for producing an object (1) according to one or more of the preceding claims 1-10, wherein the method comprises the following steps:
- producing the tire (20) of expanded thermoplastic polyurethane, wherein the tire (20) comprises an inner circumference (21), and outer circumference (22) and a recess (25) along the outer circumference (22);
- introducing the tire (20) produced of expanded thermoplastic polyurethane into a 2K or 3K mold;
- after introducing the tire (20) in the 2K or 3K mold respectively injection molding a rim (30) substantially within the inner circumference (21) of the tire (20) and injection molding a tread (40) substantially in the recess (25) along the outer circumference (22) of the tire (20).

13. The method according to claim 12, wherein the tire (20) together with the mold provide two cavities, wherein a shape of a first cavity corresponds to a shape of the rim (30) and a shape of a second cavity corresponds to a shape of the tread (40).

14. The method according to any of the claims 12-13, wherein after introducing the tire (20) produced of expanded thermoplastic polyurethane into the 2K or 3K mold a clearance is provided between the tire (20) and the mold, and wherein during injection molding the tread (40) a coating (41) is provided bridging at least part of the tire (20) between the tread (40) and the rim (30).

15. The method according to any of the preceding claims 12-14, wherein the method comprises the application of a mold selected from the group consisting of a 3K mold, a 4K mold and a 5K mold, wherein for or in addition to the injection molding of the rim (30) and of the tread (40), more than two types of plastic or more than two colors of plastic are applied in the injection molding.

## Patentansprüche

1. Objekt (1), das mindestens drei unterscheidbare Elemente umfasst, wobei das Objekt ein erstes Element (2) umfasst, das aus expandiertem Polyurethan (E-TPU) gefertigt ist, mit dem das zweite (3) beziehungsweise dritte (4) Element, die jeweils einen spritzgießbaren thermoplastischen Kunststoff umfassen, mechanisch, physikalisch oder chemisch mittels Spritzguss verknüpft ist, wobei das Objekt (1) ein Rad (10) umfasst, wobei das erste Element (2) einen Reifen (20) umfasst, der aus expandiertem thermoplastischen Polyurethan (E-TPU) gefertigt ist, und die verbleibenden beiden Elemente (3, 4) eine Felge (30) beziehungsweise eine Lauffläche (40) umfassen, wobei die Felge (30) mit einem Innenumfang (21) des Reifens (20) verbunden ist, und die Lauffläche (40) mit einem Außenumfang (22) des Reifens (20) verbunden ist, wobei ein Außenumfang (32) der Felge (30) an den Innenumfang (21) des Reifens (20) angrenzt.

2. Objekt (1) nach Anspruch 1, wobei der Reifen (20) eine Vertiefung (25) entlang des Außenumfangs (22) des Reifens (20) umfasst, wobei die Vertiefung (25) mindestens einen Teil der Lauffläche (40) umfasst.

3. Objekt (1) nach einem der vorhergehenden Ansprüche 1 bis 2, wobei die Felge (30) und die Lauffläche (40) in einem Abstand (11) zueinander konfiguriert sind.

4. Objekt (1) nach einem der vorhergehenden Ansprüche 1 bis 3, wobei eine Seitenwand (23) des Reifens (20) eine Beschichtung (41) umfasst, die einen spritzgießbaren thermoplastischen Kunststoff umfasst, wobei die Lauffläche (40) und die Beschichtung (41) den gleichen spritzgießbaren thermoplastischen Kunststoff umfassen, und wobei die Beschichtung (41) mechanisch, physikalisch und/oder chemisch mit dem Reifen (20), der Felge (30) und der Lauffläche (40) in Zusammenhang steht.

5. Objekt (1) nach einem der vorhergehenden Ansprüche 1 bis 4, wobei die Felge (30) einen spritzgießbaren thermoplastischen Kunststoff ausgewählt aus der Gruppe bestehend aus Acrylnitril-Butadien-Styrol (ABS), Nylon/Polyamid (PA), Polycarbonat (PC), Polypropylen (PP), Polystyrol (PS), Polyetheretherketon (PEEK), thermoplastischem Polyurethan (TPU) und Polyethylen mit hoher Dichte (HDPE) umfasst, und wobei die Lauffläche (40) einen spritzgießbaren thermoplastischen Kunststoff ausgewählt aus der Gruppe bestehend aus Acrylnitril-Butadien-Styrol (ABS), Nylon/Polyamid (PA), Polycarbonat (PC), Polypropylen (PP), Polystyrol (PS), Polyetheretherketon (PEEK), thermoplastischem Polyurethan (TPU) und Polyethylen mit hoher Dichte (HDPE) umfasst.

6. Objekt (1) nach einem der vorhergehenden Ansprüche 1 bis 5, wobei die Felge (30) Acrylnitril-Butadien-Styrol (ABS) umfasst.

7. Objekt (1) nach einem der vorhergehenden Ansprüche 1 bis 6, wobei die Lauffläche (40) thermoplastisches Polyurethan (TPU) umfasst.

8. Objekt (1) nach einem der vorhergehenden Ansprüche 1 bis 7, wobei die Lauffläche (40) eine Dicke (12) von mindestens einem Millimeter und höchstens sechs Millimetern umfasst.

9. Objekt (1) nach einem der vorhergehenden Ansprüche 1 bis 8, wobei die Lauffläche (40) eine Dicke (12) von mindestens zwei Millimetern und höchstens fünf Millimetern umfasst.

10. Objekt (1) nach einem der vorhergehenden Ansprüche 1 bis 9, wobei eine Elastizität des Rades (10) als Funktion von mindestens einem Charakteristikum des Rades (10) ausgewählt aus der Gruppe bestehend aus einer Dichte des Reifens (20), einer Dicke (12) der Lauffläche (40) und einer Konfiguration der Beschichtung (41) ausgewählt werden kann.

11. Transportmittel, umfassend ein Objekt (1) nach einem der vorhergehenden Ansprüche, wobei das Transportmittel eine Vorrichtung umfasst, die ausgewählt ist aus der Gruppe bestehend aus einem Kinderwagen, einem Buggy, einem Rollator als Gehhilfe und einem Rollstuhl.

12. Verfahren zur Herstellung eines Objekts (1) nach einem oder mehreren der vorhergehenden Ansprüche 1 bis 10, wobei das Verfahren die folgenden Schritte umfasst:
- Herstellen des Reifens (20) aus expandiertem thermoplastischem Polyurethan, wobei der Reifen (20) einen Innenumfang (21) und einen Außenumfang (22) und eine Vertiefung (25) entlang des Außenumfangs (22) umfasst;
- Einbringen des aus expandiertem thermoplastischem Polyurethan hergestellten Reifens (20) in eine 2K- oder 3K-Form;
- nach Einbringen des Reifens (20) in die 2K- oder 3K-Form jeweils Spritzgießen einer Felge (30) im Wesentlichen innerhalb des Innenumfangs (21) des Reifens (20) und Spritzgießen einer Lauffläche (40) im Wesentlichen in der Vertiefung (25) entlang des Außenumfangs (22) des Reifens (20).

13. Verfahren nach Anspruch 12, wobei der Reifen (20) zusammen mit der Form zwei Hohlräume bereitstellt, wobei eine Gestalt eines ersten Hohlraums einer Gestalt der Felge (30) entspricht, und eine Gestalt des zweiten Hohlraums einer Gestalt der Lauffläche (40) entspricht.

14. Verfahren nach einem der Ansprüche 12 bis 13, wobei nach der Einbringung des aus expandiertem thermoplastischem Polyurethan hergestellten Reifens (20) in die 2K- oder 3K-Form für einen Spielraum zwischen dem Reifen (20) und der Form gesorgt wird, und wobei während des Spritzgießens der Lauffläche (40) eine Beschichtung (41) bereitgestellt wird, die mindestens einen Teil des Reifens (20) zwischen der Lauffläche (40) und der Felge (30) überbrückt.

15. Verfahren nach einem der vorhergehenden Ansprüche 12 bis 14, wobei das Verfahren das Anwenden einer Form ausgewählt aus einer 3K-Form, einer 4K-Form und einer 5K-Form umfasst, wobei für das Spritzgießen der Felge (30) und der Lauffläche (40) oder zusätzlich dazu mehr als zwei Kunststofftypen oder mehr als zwei Kunststofffarben beim Spritzgießen angewendet werden.

## Revendications

1. Objet (1) comprenant au moins trois éléments distinctifs, l'objet comprenant un premier élément (2) composé d'un polyuréthane thermoplastique expansé (E-TPU) auquel respectivement le deuxième élément (3) et le troisième élément (4), chacun comprenant un plastique thermoplastique moulable par injection, sont liés mécaniquement, physiquement ou chimiquement au moyen d'un moulage par injection, l'objet (1) comprenant une roue (10), le premier élément (2) comprenant un pneu (20) composé d'un polyuréthane thermoplastique expansé (E-TPU) et les deux éléments restants (3, 4), respectivement, comprenant une jante (30) et une bande de roulement (40), la jante (30) étant connectée à une circonférence interne (21) du pneu (20) et la bande de roulement (40) étant connectée à une circonférence externe (22) du pneu (20), une circonférence externe (32) de la jante (30) jouxtant la surveillance interne (21) du pneu (20) .

2. Objet (1) selon la revendication 1, le pneu (20) comprenant une cavité (25) le long de la circonférence externe (22) du pneu (20), la cavité (25) comprenant au moins une partie de la bande de roulement (40).

3. Objet (1) selon l'une quelconque des revendications précédentes 1 et 2, la jante (30) et la bande de roulement (40) étant configurés à une distance mutuelle (11).

4. Objet (1) selon l'une quelconque des revendications 1 à 3, une paroi latérale (23) du pneu (20) comprenant un revêtement (41) comprenant un plastique thermoplastique moulable par injection, la bande de roulement (40) et le revêtement (41) comprenant le même plastique thermoplastique moulable par injection, et le revêtement (41) étant mécaniquement, physiquement et/ou chimiquement associé au pneu (20), à la jante (30) et à la bande de roulement (40).

5. Objet (1) selon l'une quelconque des revendications précédentes 1 à 4, la jante (30) comprenant un plastique thermoplastique moulable par injection choisi dans le groupe constitué par l'acrylonitrile-butadiène-styrène (ABS), le nylon/polyamide (PA), le polycarbonate (PC), le polypropylène (PP), le polystyrène (PS), la polyétheréthercétone (PEEK), le polyuréthane thermoplastique (TPU), et le polyéthylène haute densité (HDPE), et la bande de roulement (40) comprenant un plastique thermoplastique moulable par injection choisi dans le groupe constitué par l'acrylonitrile-butadiène-styrène (ABS), le nylon/polyamide (PA), le polycarbonate (PC), le polypropylène (PP), le polystyrène (PS), la polyétheréthercétone (PEEK), le polyuréthane thermoplastique (TPU), et le polyéthylène haute densité (HDPE).

6. Objet (1) selon l'une quelconque des revendications précédentes 1 à 5, la jante (30) comprenant un acrylonitrile-butadiène-styrène (ABS).

7. Objet (1) selon l'une quelconque des revendications précédentes 1 à 6, la bande de roulement (40) comprenant un polyuréthane thermoplastique (TPU).

8. Objet (1) selon l'une quelconque des revendications précédentes 1 à 7, la bande de roulement (40) comprenant une épaisseur (12) d'au moins un millimètre et d'au plus six millimètres.

9. Objet (1) selon l'une quelconque des revendications précédentes 1 à 8, la bande de roulement (40) comprenant une épaisseur (12) d'au moins deux millimètres et d'au plus cinq millimètres.

10. Objet (1) selon l'une quelconque des revendications précédentes 1 à 9, une résilience de la roue (10) pouvant être choisie en fonction d'au moins une caractéristique de la roue (10) choisie dans le groupe constitué par une densité du pneu (20), une épaisseur (12) de la bande de roulement (40), et une configuration du revêtement (41) .

11. Moyen de transport, comprenant un objet (1) selon l'une quelconque des revendications précédentes, le moyen de transport comprenant un dispositif choisi dans le groupe constitué par un landau, une poussette, un déambulateur, et une chaise roulante.

12. Procédé pour la production d'un objet (1) selon l'une ou plusieurs des revendications précédentes 1 à 10, le procédé comprenant les étapes suivantes :
- production du pneu (20) de polyuréthane thermoplastique expansé, le pneu (20) comprenant une circonférence interne (21), et une circonférence externe (22) et une cavité (25) le long de la circonférence externe (22) ;
- introduction du pneu (20) produit de polyuréthane thermoplastique expansé dans un moule 2K ou 3K ;
- après introduction du pneu (20) dans le moule 2K ou 3K respectivement, moulage par injection d'une jante (30) sensiblement dans la circonférence interne (21) du pneu (20) et moulage par injection d'une bande de roulement (40) sensiblement dans la cavité (25) le long de la circonférence externe (22) du pneu (20).

13. Procédé selon la revendication 12, le pneu (20) ensemble avec le moule fournissant deux cavités, une forme d'une première cavité correspondant à une forme de la jante (30) et une forme d'une deuxième cavité correspondant à une forme de la bande de roulement (40).

14. Procédé selon l'une quelconque des revendications 12 et 13, où après introduction du pneu (20) produit de polyuréthane thermoplastique expansé dans le moule 2K ou 3K, un intervalle est fourni entre le pneu (20) et le moule, et où pendant le moulage par injection de la bande de roulement (40) un revêtement (41) est fourni pontant au moins une partie du pneu (20) entre la bande de roulement (40) et la jante (30).

15. Procédé selon l'une quelconque des revendications 12 à 14, le procédé comprenant l'application d'un moule choisi dans le groupe constitué par un moule 3K, un moule 4K et un moule 5K, où pour le moulage par injection de la jante (30) et de la bande de roulement (40) ou en plus de celui-ci, plus de deux types de plastique ou plus de deux couleurs de plastique sont appliqué(e)s dans le moulage par injection.
